# EUROPEAN PATENT APPLICATION

(11) **EP 2 682 742 A1**
(43) Date of publication of application: **08.01.2014**
(21) Application number: 12174936.0
(22) Date of filing: 04.07.2012
(51) Int. Cl.: G01N 21/71

(54) **Fluid analysis with LIBS**

(71) Applicant: Nederlandse Organisatie voor Toegepast -Natuurwetenschappelijk Onderzoek TNO, 2628 VK Delft (NL)
(72) Inventor: van Veen Jacobus, Johannes Frederik, 2628 VK Delft (NL); Roosma, Jorg, 2628 VK Delft (NL)
(74) Representative: Jansen, Cornelis Marinus

(57) **Abstract**

Method for detecting one or more elements of the periodic system of elements, in particular one or more metal ions, in a fluid using LASER induced breakdown spectroscopy (LIBS), the method comprising
(a) contacting a sample of the fluid with a surface comprising chelating groups bound to a surface of a solid element-extraction product the chelating group having specific binding affinity for one or more elements to be detected;
(b) allowing said one or one or more elements present in the fluid to chelate with the chelating groups;
(c) removing the fluid from the solid element-extraction product whilst the one or more elements chelated to the chelating groups remain chelated; thereafter
(d) using the solid element-extraction product for a detection specimen, whilst the chelated element or elements remain chelated;
(e) and subjecting the detection specimen to LIBS, under conditions that allow detection of the one or more elements chelated to the chelating groups.

## Description

The invention relates to a method for detecting one or more elements of the periodic system of elements in a fluid using LASER Induced Breakdown Spectroscopy (LIBS). The invention further relates to a solid element-extraction product for binding one or more elements of the periodic system. The invention further relates to a detection specimen for use in LIBS. The invention further relates to a kit of parts comprising a solid element-extraction product.

LIBS is used in the art for fast element analysis of samples, but its use for analysis of liquids is generally limited. In particular, the sensitivity for elements in solvents, such as metal ions, is often low. Sensitivity can be adversely affected by the presence of other elements interfering with the analysis and/or matrix-effects (such as a high salt concentration).

It is an object of the invention to provide a novel manner of using LIBS to detect one or more elements of the periodic system in a fluid, which method allows an improvement in the detection of the element(s), or which may be used as an alternative to known methods.

The inventors have realised that this is possible by contacting a fluid with a specific solid element-extraction product.

Accordingly, the invention relates to a method for detecting one or more elements of the periodic system of elements, in particular one or more metal ions, in a fluid using LASER induced breakdown spectroscopy (LIBS), the method comprising
(a) contacting a sample of the fluid with a surface comprising chelating groups bound to a surface of a solid element-extraction product the chelating group having specific binding affinity for one or more elements to be detected;
(b) allowing said one or one or more elements present in the fluid to chelate with the chelating groups;
(c) removing the fluid from the solid element-extraction product whilst the one or more elements chelated to the chelating groups remain chelated; thereafter
(d) using the solid element-extraction product for a detection specimen, whilst the chelated element or elements remain chelated;
(e) and subjecting the detection specimen to LIBS, under conditions that allow detection of the one or more elements chelated to the chelating groups.

In a specific embodiment, the invention relates to a method for detecting one or more elements of the periodic system of elements, in particular one or more metal ions, in a fluid using LASER induced breakdown spectroscopy (LIBS), the method comprising
- contacting a sample of the fluid with a plurality of first chelating groups covalently bound to a surface of a solid element-extraction product and contacting the same or a different sample of the fluid with a plurality of second chelating groups, different from the first chelating groups, bound to the same or a different surface of the solid element-extraction product, the first and the second chelating group having specific binding affinity for one or more elements to be detected;
- allowing said one or one or more elements present in the fluid to chelate with the first chelating groups or the second chelating groups;
- removing the fluid from the solid element-extraction product whilst the one or more elements chelated to the chelating groups remain chelated; thereafter
- using the solid element-extraction product for a detection specimen, whilst the chelated element or elements remain chelated;
- and subjecting the detection specimen to LIBS, under conditions that allow detection of the one or more elements chelated to the chelating groups.

The invention further relates to a method for preparing a solid element-extraction product for chelating one or more elements of the periodic system to a surface thereof, in particular one or more metal ions, comprising providing a surface of a solid material with functional groups suitable to couple a chelating agent to the solid material and reacting the functional groups with a chelating agent. In a specific embodiment, a first part of the functional groups is reacted with a first chelating agent, whereby the first chelating agent is coupled to the surface of the solid material, and a second part of the functional groups is reacted with a second chelating agent, whereby the second chelating agent is coupled to the surface of the solid material.

The invention further relates to a detection specimen for use in LIBS, comprising a surface which surface comprises chelating groups, wherein to at least part of said chelating groups an element of the periodic system of elements, in particular a metal ion, is chelated. In a specific embodiment, the detection specimen has first chelating groups and second chelating groups different from the first, wherein all said groups or a fraction of said groups have chelated thereto an element of the periodic system of elements, in particular a metal ion.

The invention further relates to a kit of parts comprising a solid element-extraction product as defined herein, instructions for using the kit of parts in LIBS, optionally calibration samples comprising known amounts of one or more elements to be detected.

A method according to the invention is in (particular) suitable for detecting an element in a food; beverage; body fluid, in particular saliva; an environmental sample; or for detecting an element in an intermediate product or base product used in the preparation of a food or beverage.

The invention provides an alternative to known methods of detecting an element in a fluid. It is in particular desirable to have an alternative method for detecting an element in a fluid, because such method can be used as a complementary method to a known method, whereby the reliability of results from a known method can be verified.

Further, a method according to the invention is advantageous in that also with relatively simple LIBS equipment (*e.g*. making use of a standard mono-pulse system satisfactory results are achieved.

Furthermore, in an advantageous embodiment, the invention allows simultaneous multi-element analysis.

In a further advantageous embodiment, the invention provides an improved method of detection, in particular compared to for instance a standard dual pulse method, inductively coupled plasm (ICP), atomic emission spectroscopy (AES) or methods using ion-selective electrodes (ISE). In particular such improvement resides in one or more improvements selected from improved selectivity towards an element of interest, compared to other elements that may interfere with the detection (in known methods), an improved accuracy, an improved robustness, an improved detection limit, an improved sensitivity, an improved reproducibility in terms of repeated measurements with a single detection system sensor (low hysteresis), time of analysis.

The selectivity is the extent to which the detection system in a method of the invention specifically reacts to a change in the concentration of the element that is to be detected, without being affected by a change in other conditions.

The accuracy is the closeness of a reading or indication of a detection system used in a method of the invention to the actual value of the quantity being measured.

Robustness is the extent to which a method is resistant to changes in the detection system used, influences from a specific fluid and influences from the environment. Accordingly, as detection system is more stable, the back ground noise will be less and/or fewer artefacts will occur in the measuring signal, such a spikes, base line drift and/or base line shifts.

Sensitivity is the extent to which the measured signal changes upon a particular change in the concentration or amount of the element to be detected. The detection limit is the lowest in the concentration of the elemen that can be detected in a method of the invention.

The term "or" as used herein means "and/or" unless specified other wise.

The term "a" or "an" as used herein means "at least one" unless specified other wise.

When referring to 'a plurality', 'poly', 'multi' and the like, this indicates a number of at least 2.

When referring to a 'noun' (e.g. a compound, an additive etc.) in singular, the plural is meant to be included, unless specified otherwise.

When referred herein to an acid group, it conjugated base group is intended to be included and *vice versa,* unless it follows differently from the context. Thus, when referred to a carboxylic acid group, the corresponding carboxylate group is included.

When referred herein to an 'element' this generally means an element of the periodic system, unless it is specified otherwise. The term 'element' includes elements in atomic form and in ionised form. In particular, the term includes metal ions and metalloid ions.

The term 'chelating groups' is used for polydentate ligands capable of forming two or more coordinate bonds with an element. All chelating groups of a element-extraction product may have the same chemical structure. Alternately, the element-extraction product may comprise a plurality chelating groups with a different chemical structure. Thus, in a specific embodiment, the element-extraction product comprises at least two different chelating groups having specific binding affinity for one or more elements to be detected, in particular 3-200, more in particular 4-100 or 5-50.

The term 'specific binding affinity' is used in particular to indicate that an element to be detected, in particular a metal ion, has a higher binding constant to the chelating agent than at least one other element, in particular at least one other metal ion, that may be present in the fluid. Preferably, the binding constant is higher for the element or elements to be detected than for any other element that may be present in a detectable amount in the fluid to be analysed or at least for any metal that may be present in a detectable amount. More specifically, said binding constant for the element or elements to be detected is preferably at least 10 times as high (log K_{Md} - log K_{Mx =}< -1, wherein Md is the element of which the detection is desired and Mx is another element), more preferably at least 100 times as high ((log K_{Md} - log K_{Mx =}< - 1), in particular at least 500 times as high, e.g. up to 1 000 times as high, up to 2 000 times as high, or even higher.

The term 'solid element-extraction product' is used herein for a material that is solid (structurally rigid in the absence of externally applied forces at the temperature at which it is used, and preferably solid at 25 °C), and that is capable of binding an element of interest to the product, such that the element can be separated (extracted) from the fluid.

The term 'detection specimen' is used herein for material that is subjected to LIBS.

Advantageously, the detection specimen has an essentially flat detection surface. Advantageously, the detection surface of the detection specimen is essentially free of pores. Preferably the detection surface is flat.

The element extraction product is usually selected from the group of well-plates, microscope glass slides, powders and beads, which have been provided with the chelating groups.

The use of well-plates or microscope glass slides is in particular advantageous in a method according to the invention. They are easy to handle and offer good detection properties. It is in particular contemplated that such materials offer an improved sensitivity, limit of detection and/or robustness, e.g. in comparison with LIBS methods wherein a membrane is used. The use of well-plates is particularly convenient for providing an array, wherein different chelating groups are provided in different wells, the bottoms of the wells in the well plates are preferably flat, for improved detection properties.

The surface of the element extraction product can be relatively smooth or relatively rough. A rough surface may allow a higher density of chelating groups, which is advanageous for the detectability.

Beads can also advantageously be used. The beads may be used directly as detection specimen, or subjected to a shaping step, such as a pelletizing step, in order to form the detection specimen. The latter is considered to be particularly advantageous for an improved detection of the element.

The material of which the element extraction product, or at least the surface provided with the chelating groups is made, can in principle be any material to which the chelating groups are bound, that is inert in the presence of the fluid with which it is to be detected, and that is inert during LIBS detection. Suitable materials include glass materials and polymeric materials typically used in analytical chemistry for containing or processing fluids. In particular, suitable polymer materials for the solid element extraction product include polystyrene, polyalkylenes (polypropylene, polyethylene), polycarbonates, polyethylene imine, acrylamide-acrylate copolymers etc.. Matrix materials for solid-phase extraction, or chromatography (such as for ion-exchange chromatography) may also be used, in particular in the form of beads. The materials may inherently possess chelating groups or the materials may be functionalised with a chelating agent, based on known chemical methodology for functionalising surfaces of solid materials.

The chelating groups are generally chosen depending upon the element(s) of which the presence in the fluid is to be detected.

Usually, the chelating groups are selected from the group of chelating groups having specific binding affinity for an element selected from the group of 2, 3, 4, 5, 6, 7, 8, 9, 10, 11, 12 or 13 of the periodic system of elements, in particular an element from group 11 or 12 of the periodic system of elements.

In particular, the inventions provides a method for detecting an element, usually in ionic form, of group 3 or higher, also if the concentration or amount of the element in the sample is relatively low.

Specifically, the elements may be selected from the group of mercury, copper, lead, nickel, zinc, cadmium, cobalt, iron, manganese, calcium, aluminium, tin, silver, and magnesium.

One or more chelating groups may be selected to have specific affinity for more than one element. One or more chelating groups may be selected to have specific affinity for one element. Thus, combinations can be made of different chelating groups providing an element-extraction product suitable to selectively detect for the presence of a plurality of elements simultaneously.

Advantageously one or more chelating groups are from a molecule comprising two or more sites capable of forming a coordination bond (i.e. a polydentate molecule) with an element to be detected and at least one functional group that is used for binding the molecule to the surface of the solid extraction product. Such molecule is herein below also referred to as a chelating agent.

The chelating groups can be relatively small. For instance, chelating groups can be of molecules having a molecular weight of less than 500 g/mol. Chelating groups of molecules with a molecular weight of 500 g/mol or more are also suitable. The upper limit is not particularly critical. The molecular weight may be more than 1000 g/mol, e.g. up to 2000 g/mol. The total number of carbon atoms and heteroatoms, may be more than 100 or lower than 100, for instance in the range of 12-90, in particular in the range of 13-80, more in particular in the range of 15-75.

Typically, the chelating groups are organic groups comprising two or more heteroatoms, i.e. atoms other than carbon and hydrogen, such as sulphur, oxygen, nitrogen and halogens. The chelating groups have two or more ligands, which may be ionised or ionisable groups, characteristically groups that are anionic or ionisable to form an anionic group, such as an acid group, in particular a carboxylic acid, a phosphonic acid or a sulphonic acid. It is also possible that the ligand is capable of forming a coordinate bond without needing to be ionised, such as an hydroxyl group, a thiol, an alkoxy group, a thioether group.

Preferably, the chelating groups are of a molecule bound to the surface of the solid extraction product, which molecule is selected from the group of iminopolyphosphonates , in particular iminodiphosphonates; amino polyphosphonates, in particular amino diphosphonates; iminopolycarboxylates, in particular, iminodicarboxylates; polythiocycloalkyl compounds, in particular polythioxcycloalkyl carboxylic acids, more in particular polythioxcycloalkyl-oxycarboxylic acids; polythioacetoamides, in particular dialkylamino-thioxo-alkoxy-N,N-dialkyl-thioacetamides; dialkylamino-oxo-alkoxy-N,N-dialkyl-thioacetamide; polyhydroxypolyaromatic compounds, in particular polyhydroxyflavones; crown ethers, in particular crown ethers selected from the group of thio-crown-ethers and polybenzyl-polyaza-crown ethers; poly-hydroxyphenyl-phenylalkylene]amino}alkyl}amines; polyalkylthiuram disulfides; N,N'-dialkyl-N,N'-dialkyl-1,4-alkanediamide

The individual hydrocarbon groups mentioned in these compounds, such as alkyl, cycloalkyl, carboxylic acid, alkylene, may in particular have at least one, at least two carbons or at least three carbons. In particular these groups may have up to 50, up to 24, up to 15, up to 12, or up to 6 carbons.

In a specific embodiment, zinc is an element to be detected and wherein the element-extraction product comprises chelating groups having specific binding affinity for zinc selected from the group of iminodiphosphonates and iminodicarboxylates, such as iminodiacetate.

In a specific embodiment, mercury is an element to be detected and the element-extraction product comprises chelating groups having specific binding affinity for mercury selected from the group of selected of iminodiphosphonates and iminodicarboxylates, such as iminodiacetate.

In a specific embodiment, cadmium is an element to be detected and wherein the element-extraction product comprise chelating groups having specific binding affinity for cadmium.

In a specific embodiment, copper and/or silver are to be detected and the element-extraction product comprises chelating groups having specific binding affinity for copper and/or silver selected from the group of thiocrown ethers.

Specific examples of suitable molecules providing a chelating group in a method or product of the invention are shown in the following table. It is also indicated for the detection of which element they are in particular suitable.

| Structure | Name | Ion |
|---|---|---|
| 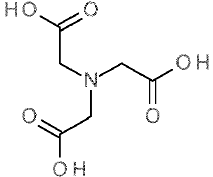 | Nitrilotriacetic acid | Hg²⁺ Cu²⁺, Pb²⁺, Ni²⁺, Zn²⁺, Cd2+, Co²⁺, Fe²⁺, Mn²⁺, Ca²⁺ |
| 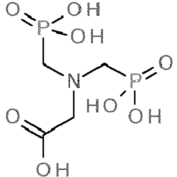 | Amino tris(methylene phosphonic acid) | Hg²⁺ Cu²⁺, Pb²⁺, Ni²⁺, Zn²⁺, Cd2+, Co²⁺, Fe²⁺, Mn²⁺, Ca²⁺ |
| 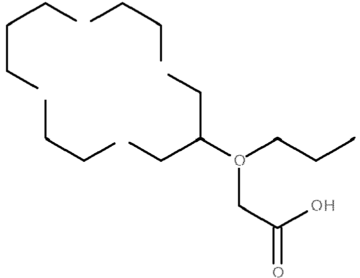 | 2-(1,4,8,11-Tetrathiacyclotetrad ec-6-yloxy)hexanoic acid 2-(3,6,10,13-Tetrathiacyclotetrad ec-1-oxy)hexanoic acid | Cu²⁺, Ag⁺ |
| 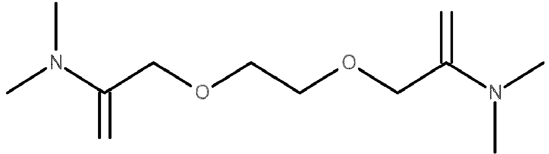 | 2-[2-[2-(dimethylamino)-2-thioxo-ethoxy]ethoxy]-N,N-dimethyl-thioacetamide | Cd²⁺ |
| 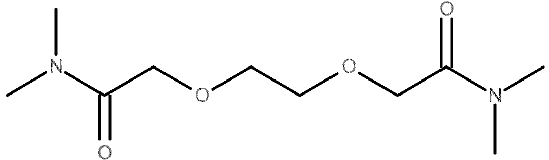 | 2-[2-[2-(dimethylamino)-2-oxo-ethoxy]ethoxy]-N,N-dimethyl-acetamide | Pb²⁺ |
| 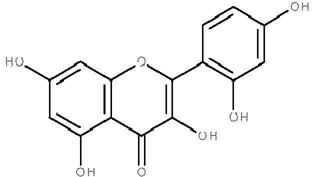 | 2',3,4',5,7-Pentahydroxyflavone | Al³⁺ |
| 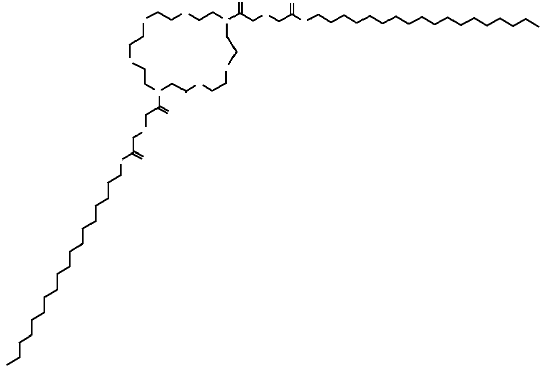 | 10,19-Bis [(octadecylcarbam oyl)methoxyacetyl]-1,4,7,13,16-pentaoxa-10,19-diazacycloheneicosan e | Ca²⁺ |
| 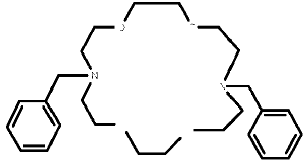 | 1,10-Dibenzyl-1,10-diaza-18-crown-6 7,16-Dibenzyl-1,4,10,13-tetraoxa-7,16-diazacyclooctadecane N,N'-Dibenzyl-4,13-diaza-18-crown-6 | Hg²⁺ |
| 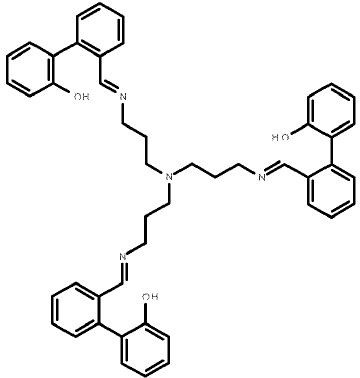 | Tris{3-{[(2-hydroxyphenyl)phen ylmethylene] amino}p ropyl}amine | Sn²⁺ |
| 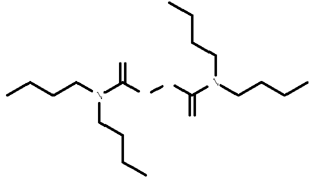 | Tetrabutylthiuram disulfide | Zn²⁺ |
| 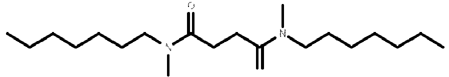 | N,N'-Diheptyl-N,N'-dimethyl-1,4-butanediamide | Mg²⁺ |

In an advantageous embodiment, the different chelating groups are positioned in an array. In particular, in such an embodiment, use may be made of chemometric data analysis, whereby selectivity is improved. The principle of chemometric data analysis is generally known in the art.

The contacting of the sample of the fluid with the chelating groups generally takes place under conditions at which the chelating groups can form a coordination bond with the element of interest, which is preferably a metal ion. If desired, the sample can be subjected to a sample treatment before or during contacting in order to modify the binding affinity. Generally factors affecting the affinity include pH, salt concentration and the presence of solvents. Thus, an acid can be added to decrease pH or a base can be added to increase pH in order to affect affinity. Salt concentration may also be modified, e.g. NaCl may be added or removed.

After contacting, which contacting may take 1 sec or more, e.g. 10 sec. to 10 min. the fluid from the solid element-extraction product whilst the one or more elements chelated to the chelating groups remain chelated. This can be accomplished in a manner known *per se.*

The solid element-extraction product from which the fluid has been remove then serves as the detection specimen, optionally after shaping (in case of the beads) for LIBS. The LIBS conditions can be based on those known in the art for the element to be detected, e.g. as indicated in the manual of the system used. Examples of LIBS equipment and detection methodology are e.g. given in N.E. Schmidt, S.R. Goode, Analysis of aqueous solutions by laser-induced breakdown spectroscopy of ion exchange membranes, Applied Spectroscopy, 56 (2002) 370-374 and in C.R. Dockery, J.E. Pender, S.R. Goode, Speciation of chromium via laser-induced breakdown spectroscopy of ion-exchange polymer membranes, Applied Spectroscopy, 59 (2005) 252-257.

The invention further relates to a method for preparing a solid element-extraction product for chelating one or more elements of the periodic system to a surface thereof, in particular one or more metal ions, comprising providing a surface of a solid material with functional groups suitable to couple a chelating agent to the solid material and reacting the functional groups with one or more chelating agents. The invention provides a flexible method, in that the solid material with the functional groups can be used as an intermediate product for providing a element-extraction product with a variety of chelating groups, dependent on the chelating agent that is used.

The surface of the solid material for the extraction product is thus preferably functionalised with functional groups that allows coupling with different chelating agents. Suitable functionalroups on the surface include amines (e.g. for coupling with an acid group of the chelating agent, for instance forming an amide bond with a carboxylate functional group), alcohol groups (e.g. forming an ester bond with a carboxylate functional group of the chelating agent), a carboxylate group (e.g. forming an ester bond with a hydroxyl functional group of the chelating agent or an amide with an amine functional group of the chelating agent). Suitable coupling chemistry is generally known in the art. A particularly useful method has been described in US 5,891,956, the contents of which are incorporated by reference.

After the surface has been functionalised, the chelating agent(s) can be contacted with the surface. In particular, it an element-extraction product is to be provided that comprises different kinds of chelating groups, one may contact different chelating agents (for the different chelating groups) at different selected places (e.g. in different wells of a well plates or in an array of spots on a microscope slide) under conditions allowing the coupling of chelating agents to the surface, thereby forming the chelating groups. This can be accomplished in a manner known *per se.*

The invention will now be illustrated by the following examples.

### Example 1

Commercially available, functionalized polystyrene beads (Sima; duolite C467, amberlite IRC748) were enriched and subsequently analysed by LIBS. These results were compared to those obtained with functionalized surfaces, e.g. in well plates. The advantage of the well plate concept is that simple coupling chemistry allows the choice of a wide range of possible chelating ligands tailor made for a certain metal ion. The selectivity is primarily obtained by the LIBS technology. The following element extraction products were used:
- Beads (0.5 - 0.7 mm) Styrene-vinylbenzene functionalised with Imino diacetate (DAB)
- Beads (0.5 - 0.7 mm) Styrene-vinylbenzene functionalised with Imino diphosponate (POB)
- Well plate (9.9 cm2) Polystyrene functionalised with imino diacetate (DAP
- Well plate (9.9 cm2) Polystyrene functionalised with imino diphosponate POP

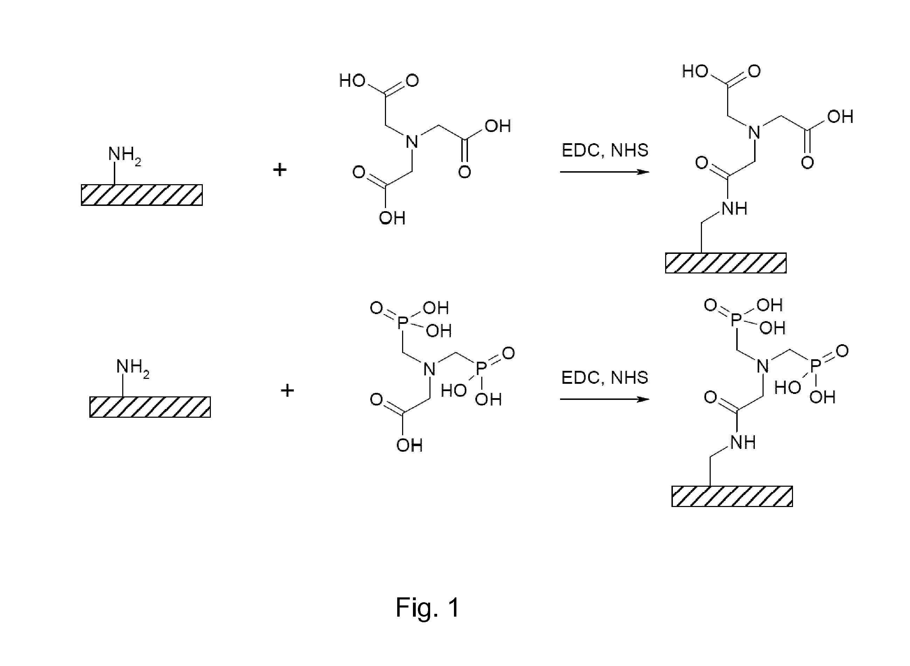

The coupling was performed by a generally known method of coupling illustrated in Figure 1.

The LIBS instrument used, is equipped with a Nd:YAG laser (1024 nm), 100 mJ/pulse and a maximum repetition rate of 20 Hz. Emission spectra are collected over the wavelength region 230 - 960 nm.

The method of operation consists of a short incubation period followed by shaking off the liquid and analysing the surface with LIBS (line scan, averaging 20 shots). In case of the beads, first a pellet has to be produced by pressing the beads on a bed of supporting polymer at approximately 12 bar.

No saturation condition is used, meaning that analyte concentrations are used to such a value that not all the chelating locations will be occupied and the sample will be totally depleted.

The pH determines both the solubility of the specific analyte and the binding constant of the chelating ligand.

The optimum pH during incubation was found to be approximately 10.5 for zinc.

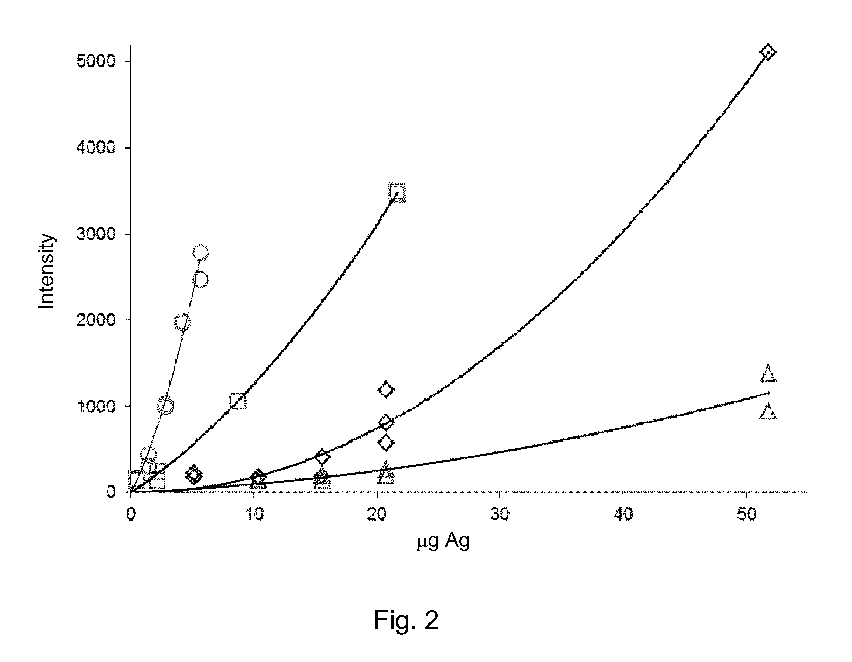

Calibration curves were recorded for zinc, using the emission line at 481.01 nm. Zinc is an important mineral as a zinc deficiency often causes taste problems for elderly people. Results are shown in Figure 2. The detection limit for zinc with DAP pellets was approximately 0.35 mg and with POB pellets approximately 1 µg. The concentration in saliva, typically 0.25 ppm, was determined in this way as 0.4 ppm. The influence of calcium in these samples was found to be negligible.

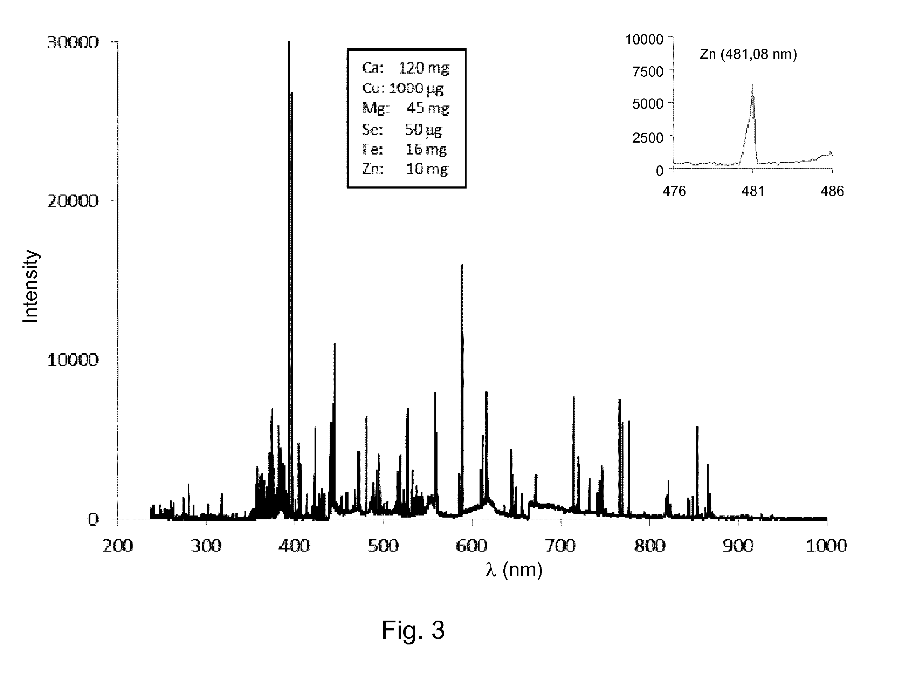

Various other metal ions were screened using the concept of the functionalized surfaces in the well plates. Figure 3 shows an example of a multicomponent analysis., spectrum of a vitamin pill extract.

Although the sensitivity is less as compared to the beads, the mode of operation is a lot simplified and more straightforward. Advantages of this approach are that it is a rapid method for multi-component analysis in complex matrices, using minimal sample pre-treatment.

### Example 2

Another chelator was tested:, a thio crown ether, for Ag+. This chelator was immobilised on glass, as schematically shown next:

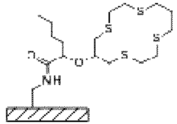

For this particular ionophore the selectivity in an ISE for Ag vs. Zn in a ISE, logKAg-Zn, is about -4.8.

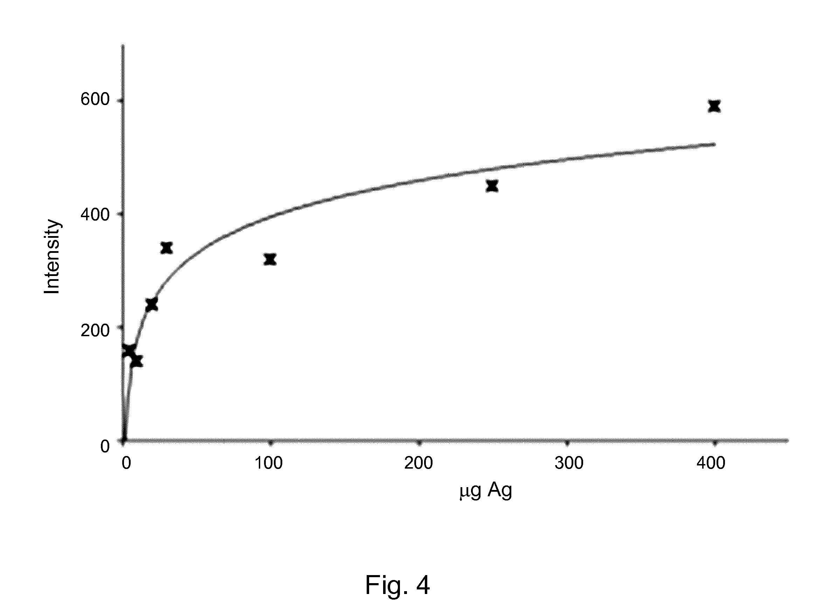

In case of LIBS the selectivity coefficient will represent the ratio of the overall responses, including the sensitivity of LIBS for the different metals and the chelating properties. Preliminary results in Figure 4 show that the thio crownether on glass under neutral pH conditions is indeed sensitive to Ag+ and that the sensitivity towards Zn is much less. Although not optimized yet, a detection limit of approximately 0.05 µM. can be obtained for Ag+.

### Example 3

The procedures described in Example 1 and 2 are used for providing a well plate wherein in some of the wells the procedure of Example 1 is used to provide a surface with a first kind of chelating groups, and in other wells the procedure of Example 2 is used to provide a surface with a second kind of chelating groups._

## Claims

1. Method for detecting one or more elements of the periodic system of elements, in particular one or more metal ions, in a fluid using LASER induced breakdown spectroscopy (LIBS), the method comprising
(a) contacting a sample of the fluid with a surface comprising plurality of chelating groups bound to a surface of a solid element-extraction product the chelating groups having specific binding affinity for one or more elements to be detected;
(b) allowing said one or one or more elements present in the fluid to chelate with the chelating groups;
(c) removing the fluid from the solid element-extraction product whilst the one or more elements chelated to the chelating groups remain chelated; thereafter
(d) using the solid element-extraction product for a detection specimen, whilst the chelated element or elements remain chelated;
(e) and subjecting the detection specimen to LIBS, under conditions that allow detection of the one or more elements chelated to the chelating groups.

2. Method according to claim 1, wherein the chelating groups are selected from the group of chelating groups having specific binding affinity for an element selected from the group of 3, 4, 5, 6, 7, 8, 9, 10, 11, 12 or 13 of the periodic system of elements, in particular an element from group 11 or 12 of the periodic system of elements, more in particular from the group of zinc, mercury, silver, copper and cadmium.

3. Method according to claim 2, wherein at least one element selected from copper and silver is to be detected and wherein the element-extraction product comprises chelating groups having specific binding affinity for copper and/or silver, selected from the group of thiocrown ethers.

4. Method according to claim 2 or 3, wherein mercury is an element to be detected and wherein the element-extraction product comprises chelating groups having specific binding affinity for mercury selected from the group of selected of iminodiphosphonates and iminodicarboxylates, such as iminodiacetate.

5. Method according to claim 2, 3 or 4, wherein cadmium is an element to be detected and wherein the element-extraction product comprise chelating groups having specific binding affinity for cadmium.

6. Method according to any of the claims 2-5, wherein zinc is an element to be detected and wherein the element-extraction product comprises chelating groups having specific binding affinity for zinc selected from the group of iminodiphosphonates and iminodicarboxylates, such as iminodiacetate.

7. Method according to any of the preceding claims, wherein the element-extraction product comprises at least two different chelating groups, the method comprising
(a) contacting the sample of the fluid with a plurality of first chelating groups bound to the surface of the solid element-extraction product and contacting the same or a different sample of the fluid with a plurality of second chelating groups, different from the first chelating groups, bound to the same or a different surface of the solid element-extraction product;
(b) allowing said one or one or more elements present in the fluid to chelate;
(c) removing the fluid from the solid element-extraction product whilst the one or more elements chelated to the chelating groups remain chelated; thereafter
(d) using the solid element-extraction product for a detection specimen, whilst the chelated element or elements remain chelated;
(e) and subjecting the detection specimen to LIBS, under conditions that allow detection of the one or more elements chelated to the chelating groups.

8. Method according to claim 7, wherein the different chelating groups are positioned in an array.

9. Method according to any of the preceding claims, wherein the solid element-extraction product is selected from well-plates, microscope glass slides and cuvettes.

10. Method according to any of the claims 1-8, wherein the solid element-extraction product is selected from the group of beads, which may be used directly as detection specimen, or are subjected to a shaping step, such as a pelletizing step, in order to form the detection specimen.

11. Method according to any of the preceding claims, wherein the method is used for detecting an element in a food, beverage, body fluid, environmental sample or for detecting an element in an intermediate product or base product used in the preparation of a food or beverage.

12. Method for preparing a solid element-extraction product for chelating one or more elements of the periodic system to a surface thereof, said product being as defined in any of the preceding claims, comprising providing a surface of a solid material with functional groups suitable to couple a chelating agent to the solid material and reacting the functional groups with the chelating agent, whereby the chelating agent is coupled to the surface of the solid material.

13. A solid element-extraction product for binding one or more elements of the periodic system, in particular one or more metal ions, suitable for use in LIBS, the product comprising a surface which surface comprises chelating groups, wherein the solid element-extraction product is as defined in any of the claims 1-11.

14. Detection specimen for use in LIBS, comprising a surface which surface comprises chelating groups, wherein at least a part of said groups has chelated thereto an element of the periodic system of elements, in particular a metal ion, wherein the detection specimen is obtainable by carrying out steps (a), (b) and (c) of a method according to any of the claims 1-11.

15. Kit of parts comprising a solid element-extraction product as defined in any of the preceding claims, instructions for using the kit of parts in LIBS, optionally calibration samples comprising known amounts of one or more elements to be detected.
